# EUROPÄISCHE PATENTSCHRIFT

(11) **EP 1 057 314 B1**
(45) Veröffentlichungstag und Bekanntmachung des Hinweises auf die Patenterteilung: **15.05.2002**
(21) Anmeldenummer: 98901925.2
(22) Anmeldetag: 19.02.1998
(51) Int. Cl.: H04M 3/48

(54) **CALLBACK VERFAHREN FÜR DIE TELEKOMMUNIKATION MIT ENTSPRECHEND ANGEPASSTEN VORRICHTUNGEN**
CALL-BACK METHOD FOR TELECOMMUNICATIONS AND DEVICES ADAPTED ACCORDINGLY
PROCEDE DE RAPPEL POUR TELECOMMUNICATIONS AVEC DISPOSITIFS ADAPTES EN CONSEQUENCE

(43) Veröffentlichungstag der Anmeldung: 06.12.2000
(73) Patentinhaber: Swisscom Mobile AG, 3050 Bern (CH)
(72) Erfinder: RITTER, Rudolf, CH-3052 Zollikofen (CH); HEUTSCHI, Walter, CH-3303 Jegensdorf (CH)
(74) Vertreter: BOVARD AG - Patentanwälte
(86) Internationale Anmeldenummer: CH9800066
(87) Internationale Veröffentlichungsnummer: WO9943139

(56) Entgegenhaltungen:
- WO-A-97/05749
- WO-A-97/17815
- WO-A-97/19548
- WO-A-97/24860
- WO-A-97/46036
- US-A- 5 420 914
- US-A- 5 509 004

## Beschreibung

Die vorliegende Erfindung betrifft ein Callback-Verfahren für die Telekommunikation mit entsprechend angepassten Vorrichtungen, insbesondere ein Callback-Verfahren über einen Backbone.

In der Telefonie sind Callback-Verfahren bekannt bei welchen ein Dienstanbieter einem Abonnenten eine spezielle Zugangsnummer zuteilt. Der Abonnent wählt diese spezielle Nummer und hängt ab. Ein Computer des Dienstanbieters ruft den Abonnenten mit einem Wählton zu einem Netzwerk mit niedrigem Tarif zurück (Callback), worauf der Abonnent dann die Nummer seines Gesprächspartners wie gewöhnlich wählen kann. Andere Verfahren ermöglichen es dem Abonnenten, gewisse Destinationsnummem vorauszubestimmen, so dass diese Nummern durch den Computer des Dienstanbieters automatisch an ein Netzwerk mit niedrigem Tarif geleitet werden.

In der Patentanmeldung WO 97/17815 werden ein Verfahren und ein System für die Telekommunikation beschrieben, in welchen Anrufe kostenoptimal geroutet werden, wobei Tarifkosten für Dienste zwischen spezifischen Punkten im Telekommunikationsnetzwerk berücksichtigt werden, die von konkurrenzierenden Dienstanbietem angegeben werden und in einer Datenbank gespeichert sind.

In der Patentanmeldung WO 97/46036 wird für ein mobiles Satellitenkommunikationssystem mit einer GSM-Netzwerk Infrastruktur ein Verfahren für die Erstellung einer kostenoptimalen Verbindung zwischen einem Mobilendgerät und einem festinstallierten Endgerät beschrieben. Gemäss dem in WO 97/46036 beschriebenen Verfahren wird die Kostenoptimierung dadurch erreicht, dass basierend auf einer im Mobilendgerät gespeicherten Nachschlagetabelle mit Länder- und Regionencodes und basierend auf der Rufnummer des festinstallierten Endgeräts eine Vermittlungsstelle gewählt wird, in der das Mobilendgerät registriert wird.

In der Patentanmeldung WO 97/19548 wird ein Callback-Verfahren für die Telekommunikation beschrieben, in welchem ein Benutzer in einem Land mit hohen Kommunikationstarifen, eine Meldung mit seiner Rufnummer und mit der Rufnummer einer anzurufenden Partei über ein Nichtsignalisierungsnetzwerk, beispielsweise das Internet, an einen Netzbetreiber eines Lands mit niedrigen Tarifkosten übermittelt. Gemäss dem in WO 97/19548 beschriebenen Verfahren ruft dieser Betreiber zunächst über ein Telefonnetz die anzurufende Partei an, dann, bei erfolgter Antwort durch die anzurufende Partei, ruft der Betreiber den anrufenden Benutzer über das Telefonnetz zurück und verbindet die anzurufende Partei und den anrufenden Benutzer für die Sprachkommunikation.

In der Patentschrift US 5 420 914 werden ein Verfahren und System für die Echtzeitwahl eines kostengünstigen Netzbetreibers für die Fernverbindung für einen Telefonanruf beschrieben. Gemäss dem in US 5 420 914 beschriebenen Verfahren werden in einem Dienstkontrollpunkt (Service Control Point, SCP) aus einem Anrufsinformationssignal des Anrufs eines anrufenden Benutzers der Destinations-LATA (Local Area Telephone Access) bestimmt und auf Grund von gespeicherten Tarifinformationen der momentan kostengünstigste Netzbetreiber für die Erstellung der Fernverbindung zu diesem Destinations-LATA bestimmt. Gemäss dem in US 5 420 914 beschriebenen Verfahren wird die Fernverbindung unter Benutzung der Dienste des gewählten kostengünstigsten Netzbetreibers erstellt und danach die Verbindung vom Destinations-LATA zum Endgerät mit der angerufenen Nummer vervollständigt.

Von der Digital Long Distance (DLD) Corporation ist ein Callback-Verfahren bekannt (DLD Mobile Callback, laut www.digitcom.com - Stand 22. Dezember 1997 - als US Patent angemeldet) bei welchem ein lokaler Netzwerkcomputer (Point-of-Presence, POP) die angerufene Nummer erfasst und digitalisierte Anrufdaten über das kostengünstige Internet an entsprechende am Verfahren teilnehmende Netzknoten (POP) sendet. In diesen Callback-Verfahren bestimmt der POP, der der Destination am nächsten ist, die günstigste verfügbare Verbindung um den Anruf fertigzustellen und erstellt die entsprechende Telefonverbindung zwischen dem Destinations-POP und der lokalen Leitung zum lokalen Netzwerkcomputer (lokaler POP). Danach schliesst der Destinations-POP den Verbindungskreis mit einer zweiten lokalen Telefonleitung zum Destinations-Ende. Neben den niederen Kosten für den Verbindungsaufbau über das Internet reduzieren sich die Gesprächskosten auf die beiden lokalen Verbindungen zum lokalen POP und vom Destinations-POP sowie auf das Ferngespräch, das hinsichtlich des günstigen Tarifs gewählt wurde.

Es ist die Aufgabe dieser Erfindung ein neues und verbessertes Callback Verfahren für die Telekommunikation vorzuschlagen.

Gemäss der vorliegenden Erfindung wird dieses Ziel insbesondere durch die Elemente des kennzeichnenden Teils der unabhängigen Ansprüche erreicht. Dieses Ziel wird zudem auch durch das System gemäss dem unabhängigen Systemanspruch erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass das Callback Verfahren so ausgeführt wird, dass von einem lokalen Gateway eine Verbindung mit dem Kommunikationsendgerät des anrufenden Teilnehmers aufgebaut wird und dass von einem Destinations-Gateway eine Verbindung mit dem Kommunikationsendgerät des angerufenen Teilnehmers aufgebaut wird und dass die Datenübertragung vom lokalen Gateway zum Destinations-Gateway über einen Backbone erfolgt. Neben den niederen Kosten für den Verbindungsaufbau von den Gäteways zum Backbone reduzieren sich die Kommunikationskosten auf die beiden lokalen Verbindungen zum lokalen Gateway und zum Destinations-Gateway sowie auf die Kosten der Datenübertragung über den Backbone, welche je nach Ausführung vernachlässigbar niedrig ausfallen können.

Vorzugsweise wird der Destinations-Gateway, beziehungsweise der lokale Gateway, so bestimmt, dass der aktuelle Tarif vom Destinations-Gateway, beziehungsweise vom lokalen Gateway, zum Kommunikationsendgerät des angerufenen, beziehungsweise des anrufenden Teilnehmers, möglichst niedrig ist. Offensichtlich können dadurch die Kommunikationskosten der beiden lokalen Verbindungen optimal tief gehalten werden.

Vorzugsweise werden danach die totalen Tarifkosten vom lokalen Gateway zum Kommunikationsendgerät des anrufenden Teilnehmers und vom Destinations-Gateway zum Kommunikationsendgerät des angerufenen Teilnehmers mit den Tarifkosten einer direkten Verbindung zwischen den beiden Kommunikationsendgeräten verglichen und anstelle der Verbindung über den Backbone, wird eine direkte Verbindung zwischen den Kommunikationsendgeräten des anrufenden und des angerufenen Teilnehmers erstellt, falls deren Tarifkosten günstiger sind. Dies hat den Vorteil, dass sichergestellt wird, dass die Callback Variante mit Kommunikation über Gateways und Backbone nur dann eingesetzt wird, wenn sie tatsächlich kostengünstiger ist.

In der vorliegenden Erfindung werden die aktuellen Tarife der Gateways vorzugsweise während der Dauer der Verbindung überwacht und falls der aktuelle Tarif eines kostengünstigeren Gateways um einen vorbestimmten Wert niedriger als der aktuelle Tarif des momentan benutzten Gateways ist, wird das betreffende Kommunikationsendgerät durch einen Verbindungswechsel über den kostengünstigeren Gateway mit dem Backbone verbunden. Dies hat den weiteren Vorteil, dass die Kommunikationskosten auch während der Dauer einer Verbindung optimiert werden können.

Vorzugsweise wird das Callback Verfahren in der vorliegenden Erfindung durch eine spezielle Meldung eingeleitet, welche von einer SIM Karte verfasst und an eine Dienstzentrale übermittelt wird. Dies hat den zusätzlichen Vorteil, dass ein Teilnehmer (oder eine Gruppe von Teilnehmern) mit seiner persönlichen SIM Karte auch über persönliche und auf andere Kommunikationsendgeräte transferierbare Callback Dienste verfügen kann.

Nachfolgend wird eine Ausführung der vorliegenden Erfindung anhand eines Beispieles beschrieben. Das Beispiel der Ausführung wird durch folgende beigelegte Figur illustriert:

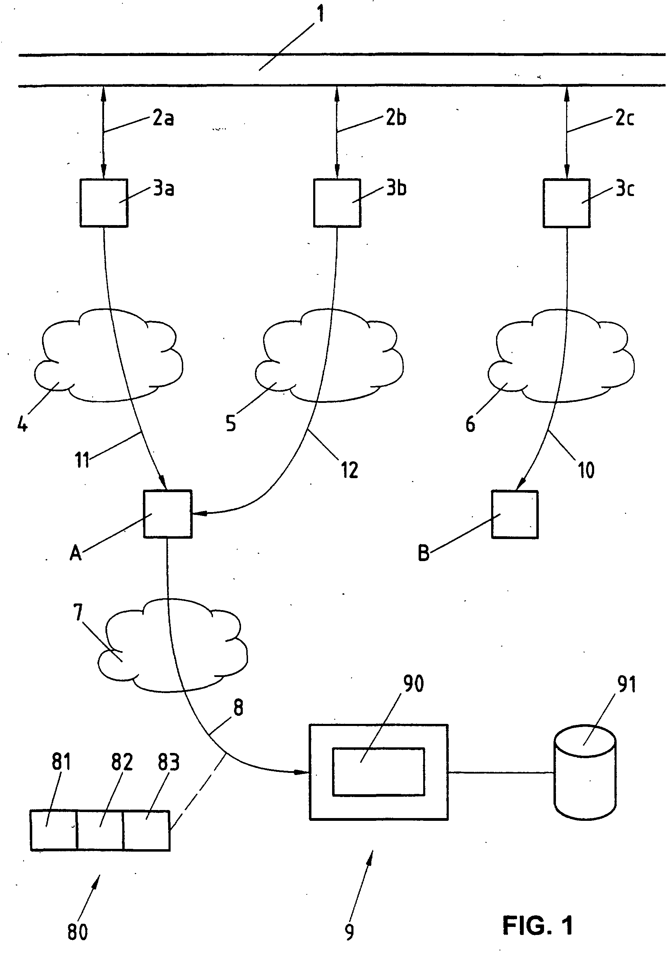

Figur 1 zeigt ein Übersichtsdiagramm mit einem Backbone mit welchem Kommunikationsnetze mittels Gateways verbunden sind und Kommunikationsendgeräte welche über die Kommunikationsnetze mit den Gateways und mit einer Dienstzentrale kommunizieren können.

Das Referenzzeichen A bezieht sich auf ein Kommunikationsendgerät eines nicht dargestellten anrufenden Teilnehmers, der beispielsweise mit einem ebenfalls nicht dargestellten angerufenen Teilnehmer mit einem Kommunikationsendgerät B kommunizieren möchte. Es gibt verschiedene Varianten ein Callback Verfahren für den Verbindungsaufbau zum angerufenen Teilnehmer zu initieren. Zum Beispiel kann der anrufende Teilnehmer entscheiden, dass ein Callback Verfahren eingeleitet werden soll und er kann dies explizit initieren indem er beispielsweise eine bestimmte Dienstnummer anwählt oder über das Keyboard des Kommunikationsendgerätes einen bestimmten speziellen Dienst der SIM Karte im Kommunikationsendgerät wählt. In einer anderen Variante wird ein Callback Verfahren automatisch eingeleitet, wenn die angerufene Nummer einer Nummer entspricht, die in einer speziellen Callback Liste eingetragen ist, wobei diese Liste auf der SIM Karte oder bei einer Dienstzentrale gespeichert sein kann. In einer Variante ist es auch möglich, dass es genügt, wenn nur die Vorwahl der angerufenen Nummer in dieser Liste eingetragen ist. Es ist letztlich auch möglich, dass jeder Anruf, oder zumindest jeder Fernanruf, ein Callback Verfahren einleitet.

Nach dem Entscheid ob ein Callback Verfahren initiert werden soll oder nicht, wird das Callback Verfahren vorzugsweise durch das Kommunikationsendgerät A so eingeleitet, dass eine spezielle Callback Meldung 80 als Callback Auftrag 8 an eine Dienstzentrale 9 übermittelt wird. Die Callback Meldung 80 umfasst ein Identifikationsfeld 81 zur Identifizierung des Callback Dienstes, ein Feld 82 mit der Nummer des anrufenden Teilnehmers, und ein Feld 83 mit der Nummer des angerufenen Teilnehmers.

Die Callback Meldung wird von einer speziellen Callback Request Anwendung, die sich vorzugsweise auf einer SIM Karte befindet, verfasst und übermittelt. Für den Fachmann ist es leicht die entsprechende Anwendung zum Beispiel als ein Java Applet zu programmieren (welches natürlich auch ausserhalb einer SIM Karte zum Beispiel in einem Personal Computer laufen kann). Die Callback Request Anwendung kann die Callback Meldung 80 beispielsweise mittels einer Short Message oder USSD Daten über ein Kommunikationsnetz 7 an die Dienstzentrale 9 übermitteln. Das Kommunikationsnetz 7 ist beispielsweise ein Mobilfunknetz, zum Beispiel ein GSM Netz, und/oder ein Fixnetz worüber Kommunikationsendgeräte A wie zum Beispiel Mobilfunktelefone und/oder Personal Computers miteinander kommunizieren.

Der Callback Auftrag 8 wird von einer Dienstzentrale 9 empfangen, als Callback Meldung 80 erkannt und an eine Callback Anwendung 90 zur weiteren Verarbeitung von Callback Aufträgen übergeben. Dies kann beispielsweise so ausgeführt werden, dass die Dienstzentrale 9 einen SIM-Server, beispielsweise ein Short Message Service Center (SSC), umfasst, in welchem spezielle Meldungen nach dem in EP 0689 368 B1 beschriebenen SICAP Verfahren, oder einem ähnlichen entsprechenden Verfahren, erkannt und an entsprechende spezielle Anwendungen, in diesem Fall an die Callback Anwendung 90, zur Weiterverarbeitung übergeben werden.

Die Callback Anwendung 90 entnimmt der Callback Meldung 80 die Nummer des anrufenden Teilnehmers 82 und die Nummer des angerufenen Teilnehmers 83. Anhand von Tariftabellen, die beispielsweise in einer der Dienstzentrale zugänglichen Datenbank 91 gespeichert sind, bestimmt die Callback Anwendung 90 vorzugsweise den kostengünstigsten Destinations-Gateway 3c, welcher Zugang zu einem Backbone 1 hat, um eine Verbindung 10 mit dem Kommunikationsendgerät B des angerufenen Teilnehmers zu erstellen. Die Tariftabellen in der Datenbank 91 enthalten dazu beispielsweise Angaben betreffend der verfügbaren Gateways mit Zugang zum Backbone 1 hinsichtlich deren geographischen Standorte und deren verschiedenen Tarife für verschiedene Zeitbereiche.

In einer Variante bestimmt die Callback Anwendung 90 auch den kostengünstigsten lokalen Gateway 3a, welcher Zugang zum Backbone 1 hat, um eine Verbindung 11 mit dem Kommunikationsendgerät A des anrufenden Teilnehmers zu erstellen.

Die in den Tariftabellen der Datenbank 91 gespeicherten Tarife können beispielsweise auch von den jeweils entsprechenden Gateways 3a, 3b, 3c, vorzugsweise unter Zuhilfenahme von gesicherten Diensten, zum Beispiel TTP-Dienste (Trusted Third Party) oder PTP-Dienste (Point-to-Point), direkt über ein Kommunikationsnetz selber aktualisiert und verwaltet werden. Dies kann mittels direktem Zugriff auf die Datenbank 91 oder auf einen Datenbank-Server oder mittels speziellen Diensten über die Dienstzentrale 9 erfolgen.

Wenn die beiden Gateways 3a und 3c bestimmt sind, vergleicht die Callback Anwendung 90 vorzugsweise die Tarifkosten für eine direkte Verbindung zwischen den beiden Kommunikationsgeräten A und B mit den totalen Tarifkosten der Verbindungen vom lokalen Gateway 3a mit dem Kommunikationsendgerät A und vom Destinations-Gateway 3c mit dem Kommunikationsendgerät B. Falls die Tarifkosten für die direkte Verbindung günstiger sind leitet die Callback Anwendung 90 der Dienstzentrale 9 eine direkte Verbindung zwischen den beiden Kommunikationsendgeräten A, B ein, welche auf herkömmliche, dem Fachmann bekannte Weise erstellt werden kann. Falls die totalen Tarifkosten für die Verbindungen vom lokalen Gateway 3a mit dem Kommunikationsendgerät A und vom Destinations-Gateway 3c mit dem Kommunikationsendgerät B günstiger sind, werden diese Verbindungen erfindungsgemäss aufgebaut, so dass der anrufende Teilnehmer mit dem Kommunikationsendgerät A über die Verbindung zum lokalen Gateway 3a, von dort über den Backbone 1 zum Destinations-Gateway 3c und von dort über die Verbindung zum Kommunikationsendgerät B mit dem angerufenen Teilnehmer kommunizieren kann. Die Verbindungen werden beispielsweise aufgebaut indem die Callback Anwendung 90 dem lokalen Gateway 3a und dem Destinations-Gateway 3c Instruktionen zum Verbindungsaufbau mit dem Kommunikationsendgerät A, beziehungsweise mit dem Kommunikationsendgerät B sendet. Die Verbindungsaufbau Instruktionen enthalten Informationen zur Identifikation des Kommunikationsendgerätes A des anrufenden Teilnehmers, des lokalen Gateways 3a, des Kommunikationsendgerätes B des angerufenen Teilnehmers, und des Destinations-Gateways 3c. Die Kommunikation zwischen der Dienstzentrale 9 und den Gateways 3a, 3b, 3c erfolgt über ein Kommunikationsnetz, beispielsweise ein ATM Netz, ein Intranet oder das öffentliche Internet.

In einer Variante kann ein bestimmter Minimalbetrag vorausgesetzt werden, um welchen die indirekte Verbindung über die Gateways 3a, 3c, welche über den Backbone 1 miteinander verbunden sind, günstiger sein muss bevor sie der direkten Verbindung zwischen den Kommunikationsendgeräten A, B vorgezogen wird. Dieser Minimalbetrag kann beispielsweise so festgesetzt werden, dass er den Tarifkosten der Kommunikation über den Backbone 1 entspricht und er eventuell auch andere Nebenkosten einschliessen kann. Der Backbone 1 ist beispielsweise ein ATM Netz, ein Intranet oder das öffentliche Internet.

Der Destinations-Gateway 3c empfängt die Verbindungsaufbau Instruktion von der Dienstzentrale 9 und erstellt eine Verbindung 2c zum Backbone 1, in einer Variante ist er fest mit dem Backbone 1 verbunden. Über das Kommunikationsnetz 6 leitet er zudem, wie weiter unten näher erläutert, einen synchronisierten Verbindungsaufbau 10 mit dem Kommunikationsendgerät B ein. Des weiteren führt er beispielsweise in einer Tabelle Informationen für das Abbilden von Verbindungen, so dass Meldungen vom Kommunikationsendgerät A des anrufenden Teilnehmers, die über die Verbindung 2c mit dem Backbone 1 empfangen werden, auf die Verbindung 10 mit dem Kommunikationsendgerät B des angerufenen Teilnehmers abgebildet werden, und dass Meldungen an das Kommunikationsendgerät A des anrufenden Teilnehmers über die Verbindung 2c mit dem Backbone 1 auf den Gateway 3a abgebildet werden. Das Kommunikationsnetz 6 ist beispielsweise ein Mobilfunknetz, zum Beispiel ein GSM Netz, oder ein Fixnetz.

Der lokale Gateway 3a empfängt die Verbindungsaufbau Instruktion von der Dienstzentrale 9 und erstellt eine Verbindung 2a zum Backbone 1, in einer Variante ist er fest mit dem Backbone 1 verbunden. Über das Kommunikationsnetz 4 leitet er zudem, wie weiter unten näher erläutert, einen synchronisierten Verbindungsaufbau 11 mit dem Kommunikationsendgerät A ein. Des weiteren führt er beispielsweise in einer Tabelle Informationen für das Abbilden von Verbindungen, so dass Meldungen vom Kommunikationsendgerät B des angerufenen Teilnehmers, die über die Verbindung 2a mit dem Backbone 1 empfangen werden, auf die Verbindung 11 mit dem Kommunikationsendgerät A des anrufenden Teilnehmers abgebildet werden, und dass Meldungen an das Kommunikationsendgerät B des angerufenen Teilnehmers über die Verbindung 2a mit dem Backbone 1 auf den Gateway 3c abgebildet werden. Das Kommunikationsnetz 4 ist beispielsweise ein Mobilfunknetz, zum Beispiel ein GSM Netz, oder ein Fixnetz.

Die Synchronisation des Verbindungsaufbaus zwischen dem lokalen Gateway 3a und dem Kommunikationsendgerät A mit dem Verbindungsaufbau zwischen dem Destinations-Gateway 3c und dem Kommunikationsendgerät B erfolgt beispielsweise über den Backbone 1. Zum Beispiel kann der Destinations-Gateway 3c dem lokalen Gateway 3a über die Verbindung 2c, den Backbone 1, und die Verbindung 2a übermitteln, dass er den Verbindungsaufbau zum Kommunikationsendgerät B des angerufenen Teilnehmers eingeleitet hat, worauf der lokale Gateway 3a dem Kommunikationsendgerät A des anrufenden Teilnehmers den eigentlichen Rückruf (Callback) 11 sendet. Darauf kann das Kommunikationsendgerät A unmittelbar die Verbindung mit dem lokalen Gateway 3a erstellen und somit den Verbindungsaufbau 10 vom Destinations-Gateway mit dem Kommunikationsendgerät B des angerufenen Teilnehmers transparent über die Verbindung 11, die Verbindung 2a, den Backbone 1, und die Verbindung 2c abwarten.

In einer anderen Variante erfolgt die Kontrolle der Synchronisation beispielsweise durch den lokalen Gateway 3a, welcher den eigentlichen Rückruf (Callback) 11 an das Kommunikationsendgerät A des anrufenden Teilnehmers sendet. Darauf kann das Kommunikationsendgerät A unmittelbar die Verbindung mit dem lokalen Gateway 3a erstellen, worauf der lokale Gateway 3a dem Destinations-Gateway 3c über die Verbindung 2a, den Backbone 1, und die Verbindung 2c übermitteln kann, dass er die Verbindung mit dem Kommunikationsendgerät A des anrufenden Teilnehmers erstellt hat. Darauf kann der Destinations-Gateway 3b den Verbindungsaufbau 10 mit dem Kommunikationsendgerät B einleiten. Für den Fachmann gibt es noch weitere Ausführungsformen für den Verbindungsaufbau auf die hier nicht weiter eingegangen wird.

Wenn die Verbindungen zwischen dem lokalen Gateway 3a und dem Kommunikationsendgerät A, beziehungsweise zwischen dem Destinations-Gateway 3c und dem Kommunikationsendgerät B erstellt sind kann die Kommunikation zwischen den Teilnehmern beginnen. Beispielsweise werden die vom Kommunikationsendgerät A aufgenommenen Sprachinformationen als Daten über das Kommunikationsnetz 4 an den lokalen Gateway 3a übermittelt. Neben dem Abbilden der entsprechenden Verbindungen gemäss der obenerwähnten Tabelle, übernehmen die Gateways 3a, 3b, 3c auch die Funktion gegebenenfalls Protokollkonversionen zwischen den angeschlossenen Kommunikationsnetzen auszuführen, indem beispielsweise die Nutzdaten, in diesem Fall zum Beispiel die Daten der Gesprächsinformationen, aus den empfangenen Protokolldateneinheiten eines ersten Kommunikationsnetzes, zum Beispiel Kommunikationsnetz 4, entnommen und in die entsprechenden Protokolldateneinheiten eines zweiten Kommunikationsnetzes, zum Beispiel Backbone 1, eingebettet werden bevor sie über das zweite Kommunikationsnetz, zum Beispiel mittels der Verbindung 2a über den Backbone 1 an den Destinations Gateway 3c gesandt werden.
Das Abbilden der Verbindungen und die Protokollkonversion funktionieren in beiden Richtungen, so dass die Teilnehmer transparent miteinander kommunizieren können.

Vorzugsweise überwacht beispielsweise die Callback Anwendung 90 der Dienstzentrale 9 die aktuellen Tarife der Gateways 3a, 3b, 3c während der Dauer einer von ihr initierten Verbindung zwischen zwei Kommunikationsendgeräten A und B über einen Backbone 1, zum Beispiel mittels der Tariftabellen in der Datenbank 91. Zudem führt die Callback Anwendung 90 der Dienstzentrale 9 zu diesem Zweck beispielsweise eine Tabelle, in welcher für solche Verbindungen Informationen zur Identifikation des Kommunikationsendgerätes A des anrufenden Teilnehmers, des lokalen Gateway 3a, des Kommunikationsendgerätes B des angerufenen Teilnehmers, und des Destinations-Gateway 3c gespeichert sind. Falls die Callback Anwendung 90 einen Gateway 3b findet, dessen aktueller Tarif für eine von ihr überwachte Verbindung, mit einem der Kommunikationsendgeräte A oder B, für einen aktuellen Zeitbereich um mindestens einen vorbestimmten Betrag günstiger ist, kann sie einen Verbindungswechsel einleiten. Dies kann beispielsweise so ausgeführt werden, dass die Callback Anwendung 90 dem kostengünstigeren Gateway 3b eine Instruktion zur Einleitung eines Handovers vom teureren lokalen Gateway 3a zum kostengünstigeren Gateway 3b sendet. Die Instruktionen enthalten beispielsweise Informationen zur Identifikation des abzulösenden teureren Gateways 3a, des damit verbundenen Kommunikationsendgerätes A, des beteiligten Gateways 3c, und des damit verbundenen Kommunikationsendgerätes B.

Der kostengünstigere Gateway 3b empfängt die Instruktion zur Einleitung eines Handovers von der Dienstzentrale 9 und erstellt eine Verbindung 2b zum Backbone 1, in einer Variante ist er fest mit dem Backbone 1 verbunden. Über das Kommunikationsnetz 5 leitet er zudem den Verbindungswechsel beispielsweise durch eine Handover Meldung 12 an das Kommunikationsendgerät A, welches mit dem abzulösenden Gateway 3a verbunden ist, ein. Der Verbindungswechsel (Handover) kann beispielsweise vom abzulösenden Kommunikationsendgerät A ausgeführt werden, indem es die Verbindung mit dem abzulösenden Gateway 3a auf Grund der Handover Meldung 12 abbaut und an deren Stelle die Verbindung mit dem kostengünstigeren Gateway 3b erstellt. Der kostengünstigere Gateway 3b führt beispielsweise in einer Tabelle Informationen für das Abbilden von Verbindungen, so dass Meldungen vom Kommunikationsendgerät B des angerufenen Teilnehmers, die über die Verbindung 2b mit dem Backbone 1 empfangen werden, auf die Verbindung 12 mit dem Kommunikationsendgerät A des anrufenden Teilnehmers abgebildet werden, und dass Meldungen an das Kommunikationsendgerät B des angerufenen Teilnehmers über die Verbindung 2b mit dem Backbone 1 auf den Gateway 3c abgebildet werden. Der auf Grund des Handovers abgelöste Gateway 3a löscht den entsprechenden Eintrag in der Tabelle für das Abbilden der Verbindungen und baut die Verbindung zum Backbone 1 ab, in einer Variante bleibt die Verbindung zum Backbone 1 bestehen. Der Destinations-Gateway 3c wird über den Verbindungswechsel (Handover) vom Gateway 3a auf den kostengünstigeren Gateway 3b informiert, beispielsweise durch den abgelösten Gateway 3a oder durch den neuen Gateway 3b, so dass er die neuen Informationen für das Abbilden von Verbindungen für Meldungen an das Kommunikationsendgerät A des anrufenden Teilnehmers über die Verbindung 2b mit dem Backbone 1 auf den kostengünstigeren Gateway 3b, beispielsweise in der entsprechenden Tabelle nachführen kann. Die transparente Kommunikation zwischen den Teilnehmern über die Kommunikationsendgeräte A und B, die Gateways 3b und 3c, und den Backbone 1 erfolgt wie oben beschrieben mittels Abbilden der Verbindungen und Protokollkonversion in beiden Richtungen. Das Kommunikationsnetz 5 ist beispielsweise ein Mobilfunknetz, zum Beispiel ein GSM Netz, oder ein Fixnetz. In einer weiteren Variante kann die Synchronisation des Handovers und die damit verbundene Verteilung von Informationen an die beteiligten Gateways durch die Callback Anwendung 90 der Dienstzentrale 9 oder alleine durch den kostengünstigeren neuen Gateway 3b über den Backbone 1 ausgeführt werden. Für den Fachmann gibt es noch weitere Ausführungsformen für den Verbindungswechsel (Handover) auf die hier nicht weiter eingegangen wird.

Neben dem oben beschriebenen Verbindungsabbau zwischen einem Kommunikationsendgerät A und einem Gateway 3a auf Grund eines Verbindungswechsels (Handover) gibt es natürlich auch einen Verbindungsabbruch der durch mindestens einen der Teilnehmer mittels seines Kommunikationsendgerätes A, B ausgelöst wird. Dieser von einem Teilnehmer ausgelöste Verbindungsabbruch wird beispielsweise durch den mit dem betroffenen Kommunikationsendgerät A, B verbundenen Gateway 3a, 3b, 3c behandelt. Der Gateway 3a, 3b, 3c detektiert einen solchen Verbindungsabbruch eines Kommunikationsendgerätes A, B durch dem Fachmann bekannte Methoden und leitet ihn gemäss der Tabelle mit den Informationen für das Abbilden der Verbindungen als Verbindungsabbau Instruktion an den an der Verbindung beteiligten Gateway 3a, 3b, 3c weiter, löscht den der Verbindung entsprechenden Eintrag in dieser Tabelle und bricht die Verbindung 2a, 2b, 2c zum Backbone 1 ab, in einer Variante bleibt die Verbindung 2a, 2b, 2c zum Backbone 1 bestehen. Der beteiligte Gateway 3a, 3b, 3c, der die Verbindungsabbruch Instruktion empfängt leitet diese gemäss der Tabelle mit den Informationen für das Abbilden der Verbindungen weiter, indem er die betreffende Verbindung mit dem entsprechenden Kommunikationsendgerät A, B abbaut. Danach löscht er den der Verbindung entsprechenden Eintrag in der Tabelle mit den Informationen für das Abbilden der Verbindungen und bricht die Verbindung 2a, 2b, 2c zum Backbone 1 ab, in einer Variante bleibt die Verbindung 2a, 2b, 2c zum Backbone 1 bestehen.

Die Callback Anwendung 90 in der Dienstzentrale 9 wird über den Verbindungsabbruch informiert, damit sie den entsprechenden Eintrag in der Tabelle zur Überwachung von Verbindungen löschen kann. Diese Information kann beispielsweise von einem der beteiligten Gateways 3a, 3b, 3c während dem Verbindungsabbau an die Callback Anwendung 90 übermittelt werden.

Nachdem eine Verbindung abgebrochen wurde können die vorher daran beteiligten Gateways 3a, 3b, 3c beispielsweise die Kommunikationskosten für ihre Abschnitte der Verbindung zwischen dem Kommunikationsendgerät A des anrufenden Teilnehmers und dem Kommunikationsendgerät B des angerufenen Teilnehmers anhand der gemessenen Kommunikationszeiten und den entsprechenden Tarifen des betreffenden Gateways 3a, 3b, 3c für die betreffenden Zeitbereiche berechnen und dem anrufenden Teilnehmer, welcher über eine Benutzeridentifikation (zum Beispiel die International Mobile Subscriber Identity, IMSI) identifiziert werden kann, belasten, indem sie die berechneten Kommunikationskosten in einen Billing-Beleg verpacken und, vorzugsweise unter Zuhilfenahme von gesicherten Diensten, zum Beispiel TTP-Dienste (Trusted Third Party) oder PTP-Dienste (Point-to-Point), an ein Billing-Zentrum, vorzugsweise das Heim-Billing-Zentrum des Teilnehmers, übermitteln. Im Billing-Zentrum werden die von den Gateways erhaltenen Kosten für deren betreffende Verbindungsabschnitte beispielsweise in eine Standardabrechnung integriert, welche dem anrufenden Teilnehmer zugeschickt wird. In einer Variante verfügen die Gateways 3a, 3b, 3c um Mittel um die berechneten Kosten direkt dem anrufenden Teilnehmer zu verrechnen, z.B. durch Belasten auf einen auf seiner SIM-Karte gespeicherten Geldbetrag. Um die Korrektheit der von den Gateways 3a, 3b, 3c übermittelten Kosten zu gewährleisten verfügt das Billing-Zentrum vorzugsweise über Mittel um die Tariftabellen und übermittelten Zeitwerte, respektive die für die Zeitmessung verantwortliche Uhr, in den betreffenden Gateways 3a, 3b, 3c zu überprüfen. Zum Beispiel kann der Gateway 3a dem anrufenden Teilnehmer mit dem Kommunikationsendgerät A die Kommunikationskosten für die Verbindung 11 zwischen dem Gateway 3a und dem Kommunikationsendgerät A belasten. In einer Variante kann er ihm zusätzlich auch Kommunikationskosten für die Verbindung 2a zum Backbone 1 belasten. In einer weiteren Variante kann er von ihm zudem auch einen Beitrag an die Benutzung des Backbones 1 verlangen. Die direkte Verrechnung durch die Gateways hat den Vorteil, dass die Gateways finanziell selbständig sein können und beispielsweise von verschiedenen Betreibern betrieben werden können, die zum Beispiel von Netzwerkbetreibern unabhängig sind. In solchen Fällen, wird ein Teil des vom Billing-Zentrum verrechneten Betrages an diese Betreiber der Gateways zurückerstattet.

Es ist wichtig darauf hinzuweisen, dass in einer Variante das Überwachen der aktuellen Gateway Tarife während der Dauer einer Verbindung und das entsprechende Einleiten eines Verbindungswechsels (Handover) direkt von einem an der Verbindung beteiligten Kommunikationsendgerät ausgeführt werden kann. Zum Beispiel, indem eine Tariftabelle mit Informationen über mindestens gewisse Gateways in einer SIM Karte des Kommunikationsendgerätes gespeichert sind und die SIM Karte einen kostengünstigeren Gateway ähnlich dem oben beschriebenen Verfahren bestimmt und direkt einen Verbindungswechsel (Handover) von einem Gateway 3a auf den kostengünstigeren Gateway 3b ausführt. In einer Variante führt die SIM Karte zusätzlich auch gleich die Bestimmung des lokalen Gateways 3a und des Destinations-Gateways 3c aus und erstellt die Verbindung mit dem lokalen Gateway 3a und leitet den Verbindungsaufbau des Destinations-Gateways mit dem Kommunikationsendgerät 3c ein. Für diese Varianten kann die Tariftabelle in der SIM Karte beispielsweise entsprechend den Bedürfnissen ihres Benutzers und/oder Besitzers oder einer Gruppe von Benutzern/Besitzern optimiert werden. In einer weiteren Variante kann die SIM Karte mittels spezieller Dienste auf die Tariftabelle, die zum Beispiel in der Dienstzentrale 9 gespeichert ist, zugreifen.

Persönliche SIM Karten welche das Callback Verfahren einleiten können und/oder das Callback Verfahren, einschliesslich der Gateway Bestimmung, des Verbindungsaufbaus und/oder der Verbindungsüberwachung mit Verbindungswechsel (Handover), ausführen können, können beispielsweise von einem Dienstleistungsanbieter, welcher beispielsweise auch der Betreiber der Gateways 3a, 3b, 3c und des Backbone 1 sein kann, an Benutzer oder Benutzergruppen angeboten werden. Solche SIM Karten können beispielsweise im Abonnement unter periodischer Rechnung und Bezahlung abgegeben-werden, oder sie können zeitlich beschränkt sein und müssen gegen Bezahlung verlängert werden. Sie können beispielsweise auch festgesetzte Beträge enthalten mit denen die Tarifkosten direkt auf der SIM Karte verrechnet werden können (Pre-Payment). Da solche Karten auf privilegierte Dienste zugreifen können, werden Verschlüsselung- und Sicherheitsverfahren wie beispielsweise Trusted Third Party (TTP) oder Point-To-Point Verschlüsselung verwendet um unbefugte Verwendung zu verhindern.

## Patentansprüche

1. Callback-Verfahren für die Telekommunikation, in welchem ein erster Teilnehmer mit einem ersten Kommunikationsendgerät (A) einem Telekommunikationssystem mitteilt, dass er mit mindestens einem zweiten Teilnehmer mit einem zweiten Kommunikationsendgerät (B) kommunizieren möchte, worauf der erste Teilnehmer kurzzeitig on-hold gesetzt wird, eine kostengünstige Verbindung zu einem Destinations-Gateway (Point of Presence, POP) (3c) in der Nähe des zweiten Teilnehmers aufgebaut wird, und die Verbindung durch Erstellen der lokalen Verbindung (10) vom genannten Gateway (3c) zum zweiten Kommunikationsendgerät (B) vervollständigt wird, **dadurch gekennzeichnet, dass** es folgende weitere Schritte umfasst:
- Einleitung des Verfahrens durch eine spezielle Meldung (80), welche vom ersten Kommunikationsendgerät (A) an eine Dienstzentrale (9) übermittelt (8) wird,
- Bestimmung des für die Verbindung (10) vom Destinations-Gateway (3c) mit dem zweiten Kommunikationsendgerät (B) momentan kostengünstigsten Destinations-Gateways (3c), der Zugang zu einem Backbone (1) hat, durch eine Callback-Anwendung (90) in der Dienstzentrale (9) anhand von Tariftabellen, die in einer der Dienstzentrale (9) zugänglichen Datenbank (91) gespeichert sind,
- Senden von Verbindungsaufbau-Instruktionen durch die Callback-Anwendung (90) über ein Kommunikationsnetz an einen lokalen Gateway (3a), der Zugang zu einem Backbone (1) hat, zum Verbindungsaufbau mit dem ersten Kommunikationsendgerät (A) und an den Destinations-Gateway (3c) zum Verbindungsaufbau mit dem zweiten Kommunikationsendgerät (B),
- Verbindungsaufbau (11) vom lokalen Gateway (3a) mit dem ersten Kommunikationsendgerät (A),
- Verbindungsaufbau (10) vom Destinations-Gateway (3c) mit dem zweiten Kommunikationsendgerät (B),
- Kommunikation zwischen dem ersten und dem zweiten Teilnehmer, wobei durch die Gateways (3a, 3c) Daten von dem jeweils verbundenen Kommunikationsendgerät (A, B) empfangen werden, wobei die Daten zwischen dem lokalen Gateway (3a) und dem Destinations-Gateway (3c) über den Backbone (1) übertragen werden, und wobei durch die Gateways (3a, 3c) Daten über den Backbone (1) empfangen und an das jeweilige verbundene Kommunikationsendgerät (A, B) gesandt werden.

2. Verfahren gemäss dem vorhergehenden Anspruch, **dadurch gekennzeichnet, dass** es zusätzlich folgende Schritte umfasst:
- Vergleich der totalen Tarifkosten vom lokalen Gateway (3a) zum ersten Kommunikationsendgerät (A) und vom Destinations-Gateway (3c) zum zweiten Kommunikationsendgerät (B) mit den Tarifkosten einer direkten Verbindung vom ersten Kommunikationsendgerät (A) zum zweiten Kommunikationsendgerät (B),
- Aufbau der direkten Verbindung vom ersten Kommunikationsendgerät (A) zum zweiten Kommunikationsendgerät (B), falls deren Tarifkosten günstiger sind.

3. Verfahren gemäss einem der vorhergehenden Ansprüche, **dadurch gekennzeichnet, dass** der lokale Gateway (3a) so bestimmt wird, dass der aktuelle Kommunikationstarif vom lokalen Gateway (3a) zum ersten Kommunikationsendgerät (A) möglichst niedrig ist.

4. Verfahren gemäss einem der vorhergehenden Ansprüche, **dadurch gekennzeichnet, dass** die spezielle Meldung (80) Callback als speziellen Dienst identifiziert (81) und die Nummer des anrufenden Teilnehmers (82) und die Nummer des angerufenen Teilnehmers (83) enthält.

5. Verfahren gemäss einem der vorhergehenden Ansprüche, **dadurch gekennzeichnet, dass** die spezielle Meldung (80) in einer SMS Short Message oder mittels USSD-Daten übermittelt wird.

6. Verfahren gemäss einem der vorhergehenden Ansprüche, **dadurch gekennzeichnet, dass** die aktuellen Tarife der Gateways (3a, 3b, 3c) während der Dauer der Verbindung (10, 11) überwacht werden und falls der aktuelle Tarif eines kostengünstigeren Gateways (3b) um einen vorbestimmten Wert niedriger als der aktuelle Tarif des momentan benutzten Gateways (3a) ist, ein Kommunikationsendgerät (A) durch einen Verbindungswechsel über den kostengünstigeren Gateway (3b) mit dem Backbone (1) verbunden wird.

7. Verfahren gemäss dem vorhergehenden Anspruch, **dadurch gekennzeichnet, dass** die Überwachung der Tarife durch die Dienstzentrale (9) ausgeführt wird.

8. Verfahren gemäss einem der Ansprüche 6 bis 7, **dadurch gekennzeichnet, dass** der Verbindungswechsel durch ein Handover (12) vom kostengünstigeren Gateway (3b) eingeleitet wird.

9. Verfahren gemäss einem der vorhergehenden Ansprüche, **dadurch gekennzeichnet, dass** mindestens gewisse Kommunikationsendgeräte (A, B) Mobilfunktelefone sind, welche eine SIM-Karte umfassen.

10. Verfahren gemäss einem der Ansprüche 2 bis 9, **dadurch gekennzeichnet, dass** mindestens gewisse Gateways (3a, 3b, 3c) ihre Tarife in einer zentralen Datenbank (91) abspeichern.

11. Verfahren gemäss einem der vorhergehenden Ansprüche, **dadurch gekennzeichnet, dass** es folgende zusätzlichen Schritte umfasst:
- Berechnen der Kommunikationskosten durch einen Gateway (3a, 3b, 3c) für mindestens gewisse Abschnitte einer Verbindung zwischen dem ersten Kommunikationsendgerät (A) und dem zweiten Kommunikationsendgerät (B) an der der betreffende Gateway (3a, 3b, 3c) beteiligt ist,
- Übermitteln der berechneten Kommunikationskosten zur Belastung des ersten Teilnehmers durch den genannten betreffenden Gateway (3a, 3b, 3c) an ein Billing-Zentrum.

12. System für die Ausführung eines Callback-Verfahrens der Telekommunikation, umfassend eine Pluralität von Kommunikationsendgeräten (A, B) und eine Pluralität von Gateways (3a, 3b, 3c), wobei die Gateways (3a, 3b, 3c) mit mindestens gewissen der Kommunikationsendgeräte (A, B) über erste Kommunikationsnetze (4, 5, 6) verbindbar sind, sowie mindestens eine Dienstzentrale (9), die so eingerichtet ist, dass sie über zweite Kommunikationsnetze mit den Gateways (3a, 3b, 3c) und über die ersten Kommunikationsnetze (4, 5, 6) mit den mindestens gewissen Kommunikationsendgeräten (A, B) kommuniziert, **dadurch gekennzeichnet,**
**dass** mindestens gewisse der Kommunikationsendgeräte (A, B) Mittel zur Einleitung des Callback-Verfahrens durch Übermittlung einer speziellen Meldung (80) an die Dienstzentrale (9) umfassen,
**dass** die Dienstzentrale, welche Zugang auf eine Datenbank (91) hat, in der Tariftabelle gespeichert sind, einen Server und eine Callback-Anwendung (90) umfasst, welche Callback-Anwendung (90) Mittel zur Ausführung folgender Schritte umfasst:
- Bestimmung des für die Verbindung vom Destinations-Gateway (3c) mit einem Kommunikationsendgerät (B) eines angerufenen Teilnehmers momentan kostengünstigsten Destinations-Gateways (3c) anhand der Tariftabellen, und
- Senden von Verbindungsaufbau-lnstruktionen über eines der zweiten Kommunikationsnetze an einen lokalen Gateway (3a) zum Verbindungsaufbau mit einem Kommunikationsendgerät (A) eines anrufenden Teilnehmers und an den Destinations-Gateway (3c) zum Verbindungsaufbau mit dem Kommunikationsendgerät (B) des angerufenen Teilnehmers,
und **dass** die Gateways (3a, 3b, 3c) Zugang zu einem Backbone (1) haben und so eingerichtet sind, dass sie die Verbindungsaufbau-Instruktionen empfangen und detektieren und entsprechend den Verbindungsaufbau-Instruktionen Verbindungen (10, 11) mit den betreffenden Kommunikationsendgeräten (A, B) aufbauen, und dass sie die Kommunikation zwischen dem anrufenden und dem angerufenen Teilnehmer ermöglichen, indem sie Daten von dem jeweils verbundenen Kommunikationsendgerät (A, B) empfangen und über den Backbone (1) an den betreffenden entfernten Gateway übermitteln, und indem sie Daten über den Backbone (1) empfangen und an das jeweilige verbundene Kommunikationsendgerät (A, B) senden.

13. System gemäss Anspruch 12, **dadurch gekennzeichnet, dass** die Callback-Anwendung (90) Mittel zur Bestimmung des momentan kostengünstigsten lokalen Gateways (3a) für die Verbindung vom lokalen Gateway (3c) mit dem Kommunikationsendgerät (A) des anrufenden Teilnehmers umfasst.

14. System gemäss einem der Ansprüche 12 bis 13, **dadurch gekennzeichnet, dass** mindestens gewisse Kommunikationsendgeräte (A, B) Mobilfunktelefone, Fixtelefone oder Personal-Computer sind, welche eine SIM-Karte umfassen, die so eingerichtet ist, dass sie die speziellen Callback-Meldungen (80), welche Callback als speziellen Dienst identifizieren (81) und die Nummer des anrufenden Teilnehmers (82) und die Nummer des angerufenen Teilnehmers (83) enthalten, verfasst und übermittelt.

15. System gemäss Anspruch 14, **dadurch gekennzeichnet, dass** die SIM-Karte programmierte Mittel enthält um Callback-Meldungen (80) zu verfassen und als Short Messages oder mittels USSD-Daten an eine Dienstzentrale zu übermitteln.

16. System gemäss einem der Ansprüche 12 bis 14, **dadurch gekennzeichnet, dass** die Callback-Anwendung (90) Mittel zur Ausführung folgender zusätzlichen Schritte umfasst:
- Überwachung der aktuellen Tarife der Gateways (3a, 3b, 3c) während der Dauer der Kommunikation zwischen den betreffenden Kommunikationsendgeräten (A, B),
- Übermitteln von Instruktionen mit nötigen Daten an die betreffenden Gateways (3a, 3b, 3c) zur Einleitung eines Handovers (12), falls der aktuelle Tarif eines kostengünstigeren Gateways (3b) um einen vorbestimmten Wert niedriger als der aktuelle Tarif eines momentan benutzten Gateways (3a) ist.

17. System gemäss einem der Ansprüche 12 bis 16, **dadurch gekennzeichnet, dass** die Dienstzentrale (9) ein Short Message Service Center (SSC) umfasst.

18. System gemäss einem der Ansprüche 12 bis 17, **dadurch gekennzeichnet, dass** die Gateways (3a, 3b, 3c) Mittel zur Ausführung folgender zusätzlichen Schritte umfassen:
- Detektieren eines Kommunikationsabbruchs eines ersten Kommunikationsendgerätes (A, B),
- Abbau der Verbindung (10, 11) mit diesem ersten Kommunikationsendgerät (A, B),
- Übermitteln einer Verbindungsabbau-Instruktion über den Backbone (1) an den entfernten Gateway mit einem verbundenen zweiten Kommunikationsendgerät (A, B),
- Empfangen von Verbindungsabbau-Instruktionen über den Backbone (1),
- Abbau der Verbindung (10, 11) mit dem entsprechenden verbundenen zweiten Kommunikationsendgerät (A, B).

19. System gemäss einem der Ansprüche 12 bis 18, **dadurch gekennzeichnet, dass** die Gateways (3a, 3b, 3c) Mittel zur Ausführung folgender zusätzlichen Schritte umfassen:
- Detektieren von Handover-Instruktionen,
- Einleiten eines Verbindungswechsels über einen kostengünstigeren Gateway (3b) bei einem Kommunikationsendgerät (A) mittels einer Handover-Meldung (12),
- Informieren der beteiligten Gateways (3a, 3c) über diesen Verbindungswechsel über den Backbone (1).

20. System gemäss einem der Ansprüche 12 bis 19, **dadurch gekennzeichnet, dass** die Gateways (3a, 3b, 3c) Mittel zur Ausführung folgender zusätzlichen Schritte umfassen:
- Berechnen der Kommunikationskosten für mindestens gewisse Abschnitte einer Verbindung zwischen einem ersten Kommunikationsendgerät (A) und einem zweiten Kommunikationsendgerät (B), an der der betreffende Gateway (3a, 3b, 3c) beteiligt ist,
- Übermitteln der berechneten Kommunikationskosten zur Belastung des anrufenden Teilnehmers an ein Billing-Zentrum.

21. System gemäss einem der Ansprüche 12 bis 20, **dadurch gekennzeichnet, dass** der Backbone (1) ein ATM-Netz, ein Intranet und/oder das Internet umfasst.

22. System gemäss einem der Ansprüche 12 bis 21, **dadurch gekennzeichnet, dass** die ersten Kommunikationsnetze ein Mobilfunknetz (4, 5, 6, 7) und/oder ein Fixnetz umfassen.

23. System gemäss einem der Ansprüche 13 bis 22, **dadurch gekennzeichnet, dass** die zweiten Kommunikationsnetze ein ATM-Netz, ein Intranet und/oder das Internet umfassen.

24. Dienstzentrale (9) für ein System für die Ausführung eines Callback-Verfahrens der Telekommunikation, welche Dienstzentrale (9) Zugang auf eine Datenbank (91) hat, in der Tariftabellen gespeichert sind, und welche Dienstzentrale (9) so eingerichtet ist, dass sie über erste Kommunikationsnetze (4, 5, 6) mit Kommunikationsendgeräten (A, B), und dass sie über zweite Kommunikationsnetze mit Gateways (3a, 3b, 3c), die Zugang zu einem Backbone (1) haben, kommuniziert, **dadurch gekennzeichnet,**
**dass** die Dienstzentrale (9) so eingerichtet ist, dass sie Callback-Meldungen (80) von Kommunikationsendgeräten (A, B) empfängt und detektiert,
**dass** die Dienstzentrale einen Server und eine Callback-Anwendung (90) umfasst, welche Callback-Anwendung (90) Mittel zur Ausführung folgender Schritte umfasst:
- Bestimmung des für die Verbindung vom Destinations-Gateway (3c) mit einem Kommunikationsendgerät (B) eines angerufenen Teilnehmers momentan kostengünstigsten Destinations-Gateways (3c) anhand der Tariftabellen, und
- Senden von Verbindungsaufbau-Instruktionen über eines der zweiten Kommunikationsnetze an einen lokalen Gateway (3a) zum Verbindungsaufbau mit einem Kommunikationsendgerät (A) eines anrufenden Teilnehmers und an den Destinations-Gateway (3c) zum Verbindungsaufbau mit dem Kommunikationsendgerät (B) des angerufenen Teilnehmers, so dass die Kommunikation zwischen dem anrufenden und dem angerufenen Teilnehmer ermöglicht wird, wobei die Gateways (3a, 3b, 3c) Daten von dem jeweils verbundenen Kommunikationsendgerät (A, B) empfangen und über den Backbone (1) an den betreffenden entfernten Gateway übermitteln, und wobei die Gateways (3a, 3b, 3c) Daten über den Backbone (1) empfangen und an das jeweilige verbundene Kommunikationsendgerät (A, B) senden.

25. Dienstzentrale (9) gemäss Anspruch 24, **dadurch gekennzeichnet, dass** die Callback-Anwendung (90) Mittel zur Bestimmung des momentan kostengünstigsten lokalen Gateways (3a) für die Verbindung vom lokalen Gateway (3c) mit dem Kommunikationsendgerät (A) des anrufenden Teilnehmers umfasst.

26. Dienstzentrale (9) gemäss einem der Ansprüche 24 bis 25, **dadurch gekennzeichnet, dass** die Callback-Anwendung (90) Mittel zur Ausführung folgender zusätzlicher Schritte umfasst:
- Überwachung der aktuellen Tarife der Gateways (3a, 3b, 3c) während der Dauer der Kommunikation zwischen den betreffenden Kommunikationsendgeräten (A, B),
- Übermitteln von Instruktionen mit nötigen Daten an die betreffenden Gateways (3a, 3b, 3c) zur Einleitung eines Handovers (12), falls der aktuelle Tarif eines kostengünstigeren Gateways (3b) um einen vorbestimmten Wert niedriger als der aktuelle Tarif eines momentan benutzten Gateways (3a) ist.

27. Dienstzentrale (9) gemäss einem der Ansprüche 24 bis 26, **dadurch gekennzeichnet, dass** die Dienstzentrale (9) ein Short Message Service Center (SSC) umfasst.

28. Dienstzentrale (9) gemäss einem der Ansprüche 24 bis 27, **dadurch gekennzeichnet, dass** die ersten Kommunikationsnetze ein Mobilfunknetz (4, 5, 6, 7) und/oder ein Fixnetz umfassen.

29. Dienstzentrale (9) gemäss einem der Ansprüche 24 bis 28, **dadurch gekennzeichnet, dass** die zweiten Kommunikationsnetze ein ATM-Netz, ein Intranet und/oder das Internet umfassen.

## Claims

1. Callback method for telecommunications, in which a first participant with a first communication terminal (A) communicates to a telecommunications system that he wishes to communicate with at least one second participant with a second communication terminal (B), whereupon the first participant is temporarily put on hold, a cost-efficient connection to a destination gateway (Point of Presence, POP) (3c) in the vicinity of the second participant is established, and the connection is completed by establishing a local connection (10) from the said gateway (3c) to the second communication terminal (B), **characterised in that** it comprises the following further steps:
- initiation of the method through a special message (80) transmitted from the first communication terminal (A) to a service centre (9),
- determination of the momentarily most cost-efficient destination gateway (3c), which has access to a backbone (1), for the connection (10) of the destination gateway (3c) to the second communication terminal (B) through a callback application (90) in the service centre (9) on the basis of tariff tables stored in a database (91) accessible to the service centre (9),
- transmission of connection-establishment instructions through the callback application (90) via a communication network to a local gateway (3a) having access to a backbone (1) to establish a connection with the first communication terminal (A) and to the destination gateway (3c) to establish a connection with the second communication terminal (B),
- establishment of a connection (11) from the local gateway (3a) to the first communication terminal (A),
- establishment of a connection (10) from the destination gateway (3c) to the second communication terminal (B),
- communication between the first and second participants, data being received through the gateways (3a, 3c) from the connected terminal in each case (A, B), the data between the local gateway (3a) and the destination gateway (3c) being transmitted via the backbone (1), and data being received through the gateways (3a, 3c) via the backbone (1) and being sent to the respective connected communication terminal (A, B).

2. Method according to the preceding claim, **characterised in that** it further comprises the following steps:
- comparison of the total tariff costs, from the local gateway (3a) to the first communication terminal (A) and from the destination gateway (3c) to the second communication terminal (B), with the tariff costs of a direct connection from the first communication terminal (A) to the second communication terminal (B),
- establishment of a direct connection from the first communication terminal (A) to the second communication terminal (B), if the tariff costs thereof are cheaper.

3. Method according to one of the preceding claims, **characterised in that** the local gateway (3a) is determined such that the current communication tariff from the local gateway (3a) to the first communication terminal (A) is as low as possible.

4. Method according to one of the preceding claims, **characterised in that** the special message (80) identifies callback as a special service (81) and contains the number of the calling participant (82) and the number of the called participant (83).

5. Method according to one of the preceding claims, **characterised in that** the special message (80) is transmitted in a SMS short message or by means of USSD data.

6. Method according to one of the preceding claims, **characterised in that** the current tariffs of the gateways (3a, 3b, 3c) are monitored for the duration of the connection (10, 11) and if the current tariff of a more cost-efficient gateway (3b) is lower by at least a pre-defined amount than the current tariff of the gateway (3a) used at the moment, a communication terminal (A) is connected to the backbone (1) through a change of connection via the more cost-efficient gateway (3b).

7. Method according to the preceding claim, **characterised in that** the monitoring of the tariffs is carried out by the service centre (9).

8. Method according to one of the claims 6 to 7, **characterised in that** the change of connection is initiated by the more cost-efficient gateway (3b) through a handover (12).

9. Method according to one of the preceding claims, **characterised in that** at least certain communication terminals (A, B) are mobile radio telephones comprising a SIM-card.

10. Method according to one of the claims 2 to 9, **characterised in that** at least certain gateways (3a, 3b, 3c) store their tariffs in a central database (91).

11. Method according to one of the preceding claims, **characterised in that** it comprises the following additional steps:
- calculation of the communication costs for at least certain sections of a connection between the first communication terminal (A) and the second communication terminal (B), by a gateway (3a, 3b, 3c) which is involved in the respective connection,
- transmission of the calculated communication costs by the said gateway in question (3a, 3b, 3c) to a billing centre for charging to the first participant.

12. System for executing a callback method for telecommunications, comprising a plurality of communication terminals (A, B) and a plurality of gateways (3a, 3b, 3c), the gateways (3a, 3b, 3c) being connectible to at least certain of the communication terminals (A, B) via first communication networks (4, 5, 6), and at least one service centre (9), which is set up in such a fashion that it communicates with the gateways (3a, 3b, 3c) via second communication networks and with the at least certain communication terminals (A, B) via the first communication networks (4, 5, 6), **characterised**
**in that** at least certain of the communication terminals (A, B) comprise means for initiating the callback method through transmission of a special message (80) to the service centre (9),
**in that** the service centre, which has access to a database (91) in which tariff tables are stored, comprises a server and a callback application (90), which callback application (90) comprises means for carrying out the following steps:
- determination, on the basis of the tariff tables, of the momentarily most cost-efficient destination gateway (3c) for the connection of the destination gateway (3c) to a communication terminal (B) of a called participant, and
- transmission of connection-establishment instructions via one of the second communication networks to a local gateway (3a) to establish a connection to a communication terminal (A) of a calling participant and to a destination gateway (3c) to establish a connection to the communication terminal (B) of the called participant,
and **in that** the gateways (3a, 3b, 3c) have access to a backbone (1) and are set up in such a fashion that they detect and receive the connection-establishment instructions, and establish connections (10, 11) with the respective communication terminals (A, B) in accordance with the connection-establishment instructions, and in that they make possible the communication between the calling and the called participants by receiving data from the respective connected communication terminal (A, B) and transmitting it to the respective remote gateway via the backbone (1), and by receiving data via the backbone (1) and transmitting it to respective connected communication terminal (A, B).

13. System according to claim 12, **characterised in that** the callback application (90) comprises means to determine the momentarily most cost-efficient local gateway (3a) for the connection of the local gateway (3c) to the communication terminal (A) of the calling participant.

14. System according to one of the claims 12 to 13, **characterised in that** at least certain communication terminals (A, B) are mobile radio telephones, fixed telephones or personal computers comprising a SIM card that is equipped in such a way that it prepares and transmits the special callback messages (80) which identify callback as a special service (81) and contain the number of the calling participant (82) and the number of the called participant (83).

15. System according to claim 14, **characterised in that** the SIM card contains programmed means to prepare callback messages (80) and transmit them to a service centre as short messages or by means of USSD data.

16. System according to one of the claims 12 to 14, **characterised in that** the callback application (90) comprises means for carrying out the following additional steps:
- monitoring the current tariffs of the gateways (3a, 3b, 3c) for the duration of the communication between the respective communication terminals (A, B),
- transmission of instructions with required data to the respective gateways (3a, 3b, 3c) for initiating a handover (12) if the current tariff of a more cost-efficient gateway (3b) is lower by a predefined amount than the current tariff of the gateway (3a) used at the moment.

17. System according to one of the claims 12 to 16, **characterised in that** the service centre (9) comprises a short message service centre (SSC).

18. System according to one of the claims 12 to 17, **characterised in that** the gateways (3a, 3b, 3c) comprise means for carrying out the following additional steps:
- detecting a termination of communication on the part of a first communication terminal (A, B),
- releasing the connection (10, 11) with this first communication terminal (A, B),
- transmitting a connection release instruction via thie backbone (1) to the remote gateway with a second communication terminal (A, B) connected,
- receiving connection release instructions via the backbone (1),
- releasing the connection (10, 11) with the corresponding connected second communication terminal (A, B).

19. System according to one of the claims 12 to 18, **characterised in that** the gateways (3a, 3b, 3c) comprise means for carrying out the following additional steps:
- detecting handover instructions,
- initiating a change of connection in a communication terminal (A) to a more cost-efficient gateway (3b) by means of a handover message (12),
- informing the involved gateways (3a, 3c) about this change of connection via the backbone (1).

20. System according to one of the claims 12 to 19, **characterised in that** the gateways (3a, 3b, 3c) comprise means for carrying out the following additional steps:
- calculation of the communication costs for at least certain sections of a connection, in which the respective gateway (3a, 3b, 3c) is involved, between a first communication terminal (A) and a second communication terminal (B),
- transmission of the calculated communication costs to a billing centre for charging the calling participant.

21. System according to one of the claims 12 to 20, **characterised in that** the backbone (1) is an ATM network, an intranet and/or the Internet.

22. System according to one of the claims 12 to 21, **characterised in that** the first communication networks comprise a mobile radio network (4, 5, 6, 7) and/or a fixed network.

23. System according to one of the claims 13 to 22, **characterised in that** the second communication networks comprise an ATM network, an intranet and/or the Internet.

24. Service centre (9) for a system for executing a callback method for telecommunications, which service centre (9) has access to a database (91) in which tariff tables are stored, and which service centre (9) is set up in such a fashion that it communicates with communication terminals (A, B) via first communication networks (4, 5, 6) and with gateways (3a, 3b, 3c), that have access to a backbone (1), via second communication networks, **characterised**
**in that** the service centre (9) is set up in such a fashion that it detects and receives callback messages (80) from communication terminals (A, B),
**in that** the service centre comprises a server and a callback application (90), which callback application (90) comprises means for carrying out the following steps:
- determination, on the basis of the tariff tables, of the momentarily most cost-efficient destination gateway (3c) for the connection of the destination gateway (3c) to a communication terminal (B) of a called participant, and
- transmission of connection establishment instructions via one of the second communication networks to a local gateway (3a) for connection establishment with a communication terminal (A) of a calling participant and to a destination gateway (3c) for connection establishment with the communication terminal (B) of the called participant, so that the communication is made possible between the calling and the called participant, the gateways (3a, 3b, 3c) receiving data from the respective connected communication terminal (A, B) and transmitting it to the respective remote gateway via the backbone (1), and the gateways (3a, 3b, 3C) receiving data via the backbone (1) and transmitting it to the respective connected communication terminal (A, B).

25. Service centre (9) according to claim 24, **characterised in that** the callback application (90) comprises means for determining the momentarily most cost-efficient local gateway (3a) for the connection of the local gateway (3c) with the communication terminal (A) of the calling participant.

26. Service centre (9) according to one of the claims 24 to 25, **characterised in that** the callback application (90) contains means for carrying out the following additional steps:
- monitoring the current tariffs of the gateways (3a, 3b, 3c) for the duration of the communication between the respective communication terminals (A, B),
- transmission of instructions with required data to the respective gateways (3a, 3b, 3c) for initiating a handover (12) if the current tariff of a more cost-efficient gateway (3b) is lower by a predefined amount than the current tariff of the gateway (3a) used at the moment.

27. Service centre (9) according to one of the claims 24 to 26, **characterised in that** the service centre (9) comprises a short message service centre (SSC).

28. Service centre (9) according to one of the claims 24 to 27, **characterised in that** the first communication networks comprise a mobile radio network (4, 5, 6, 7) and/or a fixed network.

29. Service centre (9) according to one of the claims 24 to 28, **characterised in that** the second networks comprise an ATM network, an intranet and/or the Internet.

## Revendications

1. Procédé de rappel en télécommunications, dans lequel un premier abonné équipé d'un premier terminal de communication (A) indique à un système de télécommunications qu'il souhaite communiquer avec au moins un deuxième abonné équipé d'un deuxième terminal de communication (B), sur quoi le premier abonné est brièvement mis en retenue, ou en attente, une liaison peu coûteuse étant établie vers un noeud de transit d'arrivée (Point of Presence, POP) (3c) situé à proximité du deuxième abonné et la liaison est complétée par l'établissement de la liaison locale (10) du noeud de transit (3c) mentionné au deuxième terminal de communication (B), **caractérisé en ce qu'**il comprend les opérations suivantes :
- démarrage de l'exécution du procédé par un message spécial (80) qui est envoyé (8) par le premier terminal de communication (A) à un central de service (9),
- détermination du noeud de transit d'arrivée (3c) le moins onéreux à l'instant considéré pour la liaison (10) entre le noeud de transit d'arrivée (3c) et le deuxième terminal de communication (B), et qui a accès à un réseau de base (1), par une application de rappel (90) dans le central de service (9), à l'aide de tableaux de tarifs qui sont enregistrés dans une banque de données (91) accessible au central de service (9),
- envoi d'instructions d'établissement des liaisons par l'application de rappel (90), par l'intermédiaire d'un réseau de communications, à un noeud local de transit (3a) ayant accès à un réseau de base (1), aux fins d'établissement de la liaison avec le premier terminal de communication (A) et à destination du noeud de transit d'arrivée (3c), pour l'établissement de la liaison avec le deuxième terminal de communication (B),
- établissement de la liaison (11) du noeud de transit local (3a) avec le premier terminal de communication (A),
- établissement de la liaison (10) du noeud de transit d'arrivée (3c) avec le deuxième terminal de communication (B),
- communication entre le premier et le deuxième abonnés, les noeuds de transit (3a, 3c) recevant des données du terminal de communication (A, B) qui leur est relié, les données étant transmises entre le noeud de transit local (3a) et le noeud de transit d'arrivée (3c) par l'intermédiaire du réseau de base (1) et des données étant reçues par les noeuds de transit (3a, 3c) par l'intermédiaire du réseau principal (1) et envoyées au terminal de communication (A, B) qui leur est relié.

2. Procédé selon la revendication précédente, **caractérisé en ce qu'**il comprend en outre les opérations suivantes :
- comparaison entre, d'une part, les coûts tarifaires totaux du noeud de transit local (3a) au premier terminal de communication (A) et du noeud de transit d'arrivée (3c) au deuxième terminal de communication (B) et, d'autre part, les coûts tarifaires d'une liaison directe entre le premier terminal de communication (A) et le deuxième terminal de communication (B),
- établissement de la liaison directe entre le premier terminal de communication (A) et le deuxième terminal de communication (B) si leurs coûts tarifaires sont plus intéressants.

3. Procédé selon l'une des revendications précédentes, **caractérisé en ce que** le noeud de transit local (3a) est déterminé de telle manière que le tarif de communication appliqué à ce moment du noeud de transit local (3a) au premier terminal de communication (A) soit aussi bas que possible.

4. Procédé selon l'une des revendications précédentes, **caractérisé en ce que** le message spécial (80) identifie le rappel comme un service spécial (81) et contient le numéro de l'abonné qui appelle (82) et le numéro de l'abonné appelé (83).

5. Procédé selon l'une des revendications précédentes, **caractérisé en ce que** le message spécial (80) est transmis dans un message court SMS ou au moyen de données USSD.

6. Procédé selon l'une des revendications précédentes, **caractérisé en ce que** les tarifs appliqués des noeuds de transit (3a, 3b, 3c) sont surveillés pendant la durée de la liaison (10, 11) et, si le tarif appliqué d'un noeud de transit moins cher (3b) est inférieur, d'une somme fixée d'avance, au tarif appliqué du noeud de transit (3a) utilisé à ce moment, un terminal de communication (A) est relié au réseau de base (1) grâce à un changement de liaison au profit du noeud de transit le moins cher (3b).

7. Procédé selon la revendication précédente, **caractérisé en ce que** la surveillance des tarifs est effectuée par le central de service (9).

8. Procédé selon la revendication 6 ou 7, **caractérisé en ce que** le changement de liaison est déclenché par le noeud de transit le moins cher (3b) à l'aide d'un transfert (12).

9. Procédé selon l'une des revendications précédentes, **caractérisé en ce qu'**au moins certains terminaux de communication (A, B) sont des téléphones mobiles comprenant une carte SIM.

10. Procédé selon l'une des revendications 2 à 9, **caractérisé en ce qu'**au moins certains noeuds de transit (3a, 3b, 3c) mettent en mémoire leurs tarifs dans une banque de données centrale (91).

11. Procédé selon l'une des revendications précédentes, **caractérisé en ce qu'**il comprend les opérations supplémentaires suivantes :
- calcul des frais de communication par un noeud de transit (3a, 3b, 3c) au moins pour certaines sections d'une liaison entre le premier terminal de communication (A) et le deuxième terminal de communication (B) à laquelle le noeud de transit considéré (3a, 3b, 3c) participe,
- transmission des frais de communication calculés à un centre de facturation, par le noeud de transit considéré mentionné (3a, 3b, 3c), aux fins d'imputation au premier abonné.

12. Système d'application d'un procédé de rappel en télécommunications, comprenant plusieurs terminaux de communication (A, B) et plusieurs, les noeuds de transit (3a, 3b, 3c) pouvant être reliés au moins à certains des terminaux de communication (A, B) pouvant être reliés par de premiers réseaux de communication (4, 5, 6), ainsi qu'au moins un central de service (9) qui est réalisé de telle manière qu'il communique avec les noeuds de transit (3a, 3b, 3c) par de deuxièmes réseaux de communication et avec au moins certains terminaux de communication (A, B), déjà mentionnés, par les premiers réseaux de communication (4, 5, 6), **caractérisé en ce**
**qu'**au moins certains des terminaux de communication (A, B) comprennent des moyens de lancement du procédé de rappel par la transmission d'un message spécial (80) au le central de service (9),
**que** le central de service, qui a accès à une banque de données (91) dans laquelle des tableaux de tarifs sont enregistrés, comprend un serveur et une application de rappel (90), celle-ci comprenant des moyens d'exécution des opérations suivantes :
- détermination, à l'aide des tableaux de tarifs, du noeud de transit d'arrivée (3c) le moins cher au moment considéré pour la liaison entre le noeud de transit d'arrivée (3c) et un terminal de communication (B) d'un abonné appelé, et
- envoi d'instructions pour l'établissement de liaisons, par l'intermédiaire de l'un des deuxièmes réseaux de communication, à un noeud de transit local (3a), pour établir la liaison avec un terminal de communication (A) d'un abonné qui appelle, et au noeud de transit d'arrivée (3c), pour établir la liaison avec le terminal de communication (B) de l'abonné appelé,
et **que** les noeuds de transit (3a, 3b, 3c) ont accès à un réseau de base (1) et sont réalisés de telle manière qu'ils reçoivent et détectent les instructions pour l'établissement de liaisons et, conformément à ces instructions, établissent des liaisons (10, 11) avec les terminaux de communication que cela concerne (A, B), et qu'ils permettent la communication entre l'abonné qui appelle et celui qui est appelé, du fait qu'ils reçoivent des données du terminal de communication qui est connecté (A, B) et les envoient, par l'intermédiaire du réseau de base (1), au noeud de transit éloigné que cela concerne, et du fait qu'ils reçoivent des données par l'intermédiaire du réseau de base (1) et les envoient au terminal de communication (A, B) qui leur est relié dans le cas considéré.

13. Système selon la revendication 12, **caractérisé en ce que** l'application de rappel (90) comprend des moyens de détermination du noeud de transit local (3a) le moins cher à l'instant considéré, pour la liaison entre le noeud de transit local (3c) et le terminal de communication (A) de l'abonné qui appelle.

14. Système selon la revendication 12 ou 13, **caractérisé en ce qu'**au moins certains terminaux de communication (A, B) sont des téléphones mobiles, des téléphones fixes ou des ordinateurs personnels pourvus d'une carte SIM conçue de telle manière qu'elle confectionne et envoie les messages de rappel spéciaux (80) qui identifient le rappel en tant que service spécial (81) et contiennent les numéros de l'abonné qui appelle (82) et de l'abonné appelé (83).

15. Système selon la revendication 14, **caractérisé en ce que** la carte SIM comporte des moyens programmés, afin de confectionner des messages de rappel (80) et de les envoyer, sous forme de messages courts ou au moyen de données USSD, à un central de service.

16. Système selon l'une des revendications 12 à 14, **caractérisé en ce que** l'application de rappel (90) comporte des moyens destinés à l'exécution des opérations supplémentaires suivantes :
- surveillance des tarifs en cours des noeuds de transit (3a, 3b, 3c) pendant la durée de la communication entre les terminaux de communication considérés (A, B),
- envoi d'instructions, avec des données nécessaires, aux noeuds de transit (3a, 3b, 3c) voulus, pour déclencher un transfert (12) si le tarif en cours d'un noeud de transit moins cher (3b) est inférieur, d'une différence déterminée à l'avance, au tarif en cours d'un noeud de transit (3a) utilisé à ce moment.

17. Système selon l'une des revendications 12 à 16, **caractérisé en ce que** le central de service (9) comprend un centre pour messages courts (SSC).

18. Système selon l'une des revendications 12 à 17, **caractérisé en ce que** les noeuds de transit (3a, 3b, 3c) possèdent des moyens servant à exécuter les opérations supplémentaires suivantes :
- détection d'une interruption de la communication par un premier terminal de communication (A, B),
- suppression de la liaison (10, 11) avec ce premier terminal de communication (A, B),
- transmission d'une instruction de suppression de la liaison, par l'intermédiaire du réseau de base (1), au noeud de transit éloigné avec un deuxième terminal de communication (A, B) qui lui est relié,
- réception d'instructions de suppression de la liaison par l'intermédiaire du réseau de base (1),
- suppression de la liaison (10, 11) avec le deuxième terminal de communication (A, B) correspondant qui est connecté.

19. Système selon l'une des revendications 12 à 18, **caractérisé en ce que** les noeuds de transit (3a, 3b, 3c) comprennent des moyens permettant d'exécuter les opérations supplémentaires suivantes :
- détection d'instructions de transfert,
- lancement d'un changement de liaison passant par un noeud de transit (3b) moins cher, pour un terminal de communication (A), au moyen d'un message de transfert (12),
- information des noeuds de transit (3a, 3c) participants au sujet de ce changement de liaison, en passant par le réseau de base (1).

20. Système selon l'une des revendications 12 à 19, **caractérisé en ce que** les noeuds de transit (3a, 3b, 3c) possèdent des moyens pour l'exécution des opérations supplémentaires suivantes :
- calcul des frais de communication au moins pour certaines sections d'une liaison entre un premier terminal de communication (A) et un deuxième terminal de communication (B) à laquelle participe le noeud de transit (3a, 3b, 3c) considéré,
- transmission des frais de communication calculés à un centre de facturation aux fins d'imputation à l'abonné qui appelle.

21. Système selon l'une des revendications 12 à 20, **caractérisé en ce que** le réseau de base (1) comprend un réseau ATM, un Intranet ou Internet, ou les deux.

22. Système selon l'une des revendications 12 à 21, **caractérisé en ce que** les premiers réseaux de communication comprennent un réseau de téléphonie mobile (4, 5, 6, 7) ou un réseau fixe, ou les deux.

23. Système selon l'une des revendications 12 à 22, **caractérisé en ce que** les deuxièmes réseaux de communication comprennent un réseau ATM, un Intranet ou Internet, ou les deux.

24. Central de service (9) pour un système destiné à appliquer un procédé de rappel en télécommunication, ce central de service (9) ayant accès à une banque de données (91) dans laquelle sont enregistrés des tableaux de tarifs et étant réalisé de manière à communiquer, par de premiers réseaux de communication (4, 5, 6), avec des terminaux de communication (A, B) et, par de deuxièmes réseaux de communication, avec des noeuds de transit (3a, 3b, 3c) ayant accès à un réseau de base (1), **caractérisé en ce que**
le central de service (9) est réalisé de manière à recevoir et à détecter des messages de rappel (80) de terminaux de communication (A, B)
et que le central de service (9) comprend un serveur et une application de rappel (90), celle-ci comprenant des moyens qui servent à l'exécution des opérations suivantes :
- détermination, à l'aide des tableaux de tarifs, du noeud de transit d'arrivée (3c) le moins coûteux, au moment considéré, pour la liaison entre le noeud de transit d'arrivée (3c) et un terminal de communication (B) d'un abonné appelé, et
- envoi d'instructions pour l'établissement de la liaison, par l'un des deuxièmes réseaux de communication, à un noeud de transit local (3a), pour l'établissement d'une liaison avec un terminal de communication (A) d'un abonné qui appelle et au noeud de transit d'arrivée (3c), pour l'établissement d'une liaison avec le terminal de communication (B) de l'abonné appelé, de telle sorte que la communication entre les abonnés appelant et appelé soit rendue possible, les noeuds de transit (3a, 3b, 3c) recevant des données du terminal de communication (A, B) auquel chacun d'eux est relié et les transmettant, par le réseau de base (1), au noeud de transit éloigné considéré, et les noeuds de transit (3a, 3b, 3c) recevant des données par le réseau de base (1) et les envoyant au terminal de communication (A, B) auquel chacun d'eux est relié.

25. Central de service (9) selon la revendication 24, **caractérisé en ce que** l'application de rappel (90) possède des moyens de détermination du noeud de transit local (3a) le moins cher au moment considéré, pour la liaison entre le noeud de transit local (3c) et le terminal de communication (A) de l'abonné qui appelle.

26. Central de service (9) selon la revendication 24 ou 25, **caractérisé en ce que** l'application de rappel (90) possède des moyens pour l'exécution des opérations supplémentaires suivantes :
- surveillance des tarifs en cours des noeuds de transit (3a, 3b, 3c) pendant la durée de la communication entre les terminaux de communication (A, B) considérés,
- envoi d'instructions, avec des données nécessaires, aux noeuds de transit (3a, 3b, 3c) voulus pour le lancement d'un transfert (12) si le tarif en cours d'un noeud de transit moins cher (3b) est inférieur, dans une mesure déterminée à l'avance, au tarif en cours d'un noeud de transit (3a) utilisé au moment considéré.

27. Central de service (9) selon l'une des revendications 24 à 26, **caractérisé en ce qu'**il comprend un centre pour messages courts ou Short Message Service Center (SSC).

28. Central de service (9) selon l'une des revendications 24 à 27, **caractérisé en ce que** les premiers réseaux de communications comprennent un réseau de téléphonie mobile (4, 5, 6, 7) ou un réseau fixe, ou les deux.

29. Central de service (9) selon l'une des revendications 24 à 28, **caractérisé en ce que** les deuxièmes réseaux de communications comprennent un réseau ATM, un réseau Intranet ou Internet, ou les deux.
